# EUROPEAN PATENT SPECIFICATION

(11) **EP 3 026 008 B1**
(45) Date of publication and mention of the grant of the patent: **27.06.2018**
(21) Application number: 15194584.7
(22) Date of filing: 13.11.2015
(51) Int. Cl.: B67D 7/02, B67D 1/08

(54) **LIQUID WITHDRAWING SYSTEM AND LIQUID WITHDRAWING DEVICE**
FLÜSSIGKEITSENTNAHMESYSTEM UND FLÜSSIGKEITSENTNAHMEVORRICHTUNG
SYSTÈME ET DISPOSITIF DE RETRAIT DE LIQUIDE

(30) Priority: 26.11.2014 JP 2014238772
(43) Date of publication of application: 01.06.2016
(73) Proprietor: Surpass Industry Co., Ltd., Gyoda-shi Saitama 361-0037 (JP)
(72) Inventor: IMAI, Takashi, Gyoda-shi, Saitama 361-0037 (JP); HASUNUMA, Masahiro, Gyoda-shi, Saitama 361-0037 (JP); KOBAYASHI, Masamichi, Gyoda-shi, Saitama 361-0037 (JP)
(74) Representative: McWilliams, David John

(56) References cited:
- US-A- 3 129 730
- US-A- 3 698 417
- US-A- 5 299 608
- US-A1- 2009 184 119
- US-A1- 2009 230 132
- US-A1- 2011 108 580
- US-A1- 2013 105 498

## Description

### {Technical Field}

The present invention relates to a liquid withdrawing system for withdrawing a liquid from a container.

### {Background Art}

A connector for liquid tank has been known that is attached to a neck finish portion of a liquid tank containing a liquid (for example, refer to PTL 1).

In a connector for liquid tank disclosed in PTL 1, a plug body is inserted along an inner circumferential surface of a neck finish portion to thereby insert a siphon tube attached to the plug body toward a bottom surface of a liquid tank.

### {Citation List}

### {Patent Literature}

{PTL 1} Japanese Unexamined Patent Application, Publication No. 2009-173292{Summary of Invention}. A further example of a known liquid withdrawing device is disclosed in US5299608. This document discloses the preamble of independent claim 1.

### {Technical Problem}

In withdrawing a liquid from a liquid tank to the outside, it is desirable to reduce liquid that cannot be withdrawn from and is left in the liquid tank (hereinafter, referred to as residue). And there is known a liquid tank that has a recess on its bottom surface for reducing a residue. The residue can be reduced by inserting a distal end of a siphon tube into the recess of the liquid tank.

If, however, the distal end of the siphon tube fails to be inserted appropriately into the recess, the residue may be left in the recess. It has not been easy to appropriately insert the distal end of the siphon tube into the recess because the distal end of the siphon tube and the recess cannot be readily checked visually in attaching the connector for liquid tank to the liquid tank.

The present invention has been made in view of the above circumferences and an object of the present invention is to provide a liquid withdrawing system and a liquid withdrawing device that allow, in attaching the liquid withdrawing device to a container having a recess on the bottom surface, the distal end of the siphon tube in the liquid withdrawing device to be reliably inserted into the recess.

### {Solution to Problem}

In order to solve the foregoing problem, the following solutions have been adopted in the present invention.

A liquid withdrawing system according to an aspect of the present invention includes: a first container formed in a cylindrical shape along a first axis extending in a vertical direction, the first container having on a top surface an opening portion extending in a direction of the first axis and a recess; and a liquid withdrawing device attached to the opening portion, the liquid withdrawing device including: a cylindrical contact portion having a cylindrical shape, the cylindrical contact portion being in contact with an inner circumferential surface of the opening portion when the liquid withdrawing device is attached to the opening portion; an engaging claw connected to a lower end of the cylindrical contact portion, the engaging claw being elastically deformed inwardly when inserted along the inner circumferential surface of the opening portion and engaged with a lower end of the opening portion after passing through the opening portion; a cylindrical guide portion having a cylindrical shape and connected to a lower end of the engaging claw, the cylindrical guide portion being in contact with the inner circumferential surface of the opening portion when inserted along the inner circumferential surface; and a flow channel portion having a liquid flow channel connected to the siphon tube and a gas flow channel for leading a pressurizing gas supplied from an outside of the first container to an inner space of the first container, characterized in that the siphon tube extends in a second axis direction and inserted toward the bottom surface of the first container; in that the recess is provided at a position on a bottom surface of the container corresponding to the position of the opening portion on the top surface of the container, wherein the cylindrical guide portion guides a distal end of the siphon tube so that the distal end of the siphon tube is reliably inserted into the recess; and in that a second length in the second axis direction from a lower end of the cylindrical guide portion to a distal end of the siphon tube is shorter than a first length in the first axis direction from an upper end of the opening portion to the bottom surface of the first container, and a third length in the second axis direction from the engaging claw to the distal end of the siphon tube is longer than the first length such that when the engaging claw passes through the inner circumferential surface of the opening portion, a distal end of the siphon tube is in contact with the bottom portion of the recess.

In attaching the liquid withdrawing device to the opening portion of the first container, the lower end of the cylindrical guide portion is inserted into the opening portion, and the engaging claw is inserted while being elastically deformed inwardly and then engaged with the lower end of the opening portion.

In the liquid withdrawing system of the aspect, the second length in the axis direction from the lower end of the cylindrical guide portion to the distal end of the siphon tube is shorter than the first length in the axis direction from the upper end of the opening portion to the bottom surface of the first container.

Accordingly, the distal end of the siphon tube has not reached the bottom surface of the first container at the time of inserting the lower end of the cylindrical guide portion into the opening portion. Hence, at the time of inserting the lower end of the cylindrical guide portion into the opening portion, the distal end of the siphon tube can be placed at a position from which the distal end can be reliably accommodated in the recess of the bottom surface of the first container.

Also, because the cylindrical guide portion allows the siphon tube to be guided along the axis, the distal end of the siphon tube can be reliably inserted into the recess of the first container.

Also, in the liquid withdrawing system of the aspect, the third length in the axis direction from the engaging claw to the distal end of the siphon tube is longer than the first length in the axis direction from the upper end of the opening portion to the bottom surface of the first container. Accordingly, the distal end of the siphon tube becomes inserted in the recess of the first container at the time when the engaging claw passes through the upper end of the opening portion.

In order to move the engaging claw from the upper end to the lower end of the opening portion, the liquid withdrawing device needs to be pushed in such that the engaging claw is elastically deformed inwardly. Here, because the distal end of the siphon tube has been already inserted in the recess, the action of pushing in the liquid withdrawing device never moves the distal end of the siphon tube to positions other than the recess.

Accordingly, the liquid withdrawing device can be attached to the opening portion of the first container with the distal end of the siphon tube inserted in the recess.

It may be configured such that the liquid withdrawing system according to the aspect of the present invention includes a second container formed in a cylindrical shape along the first axis direction, the second container accommodating the first container with the opening portion being exposed and an inner circumferential surface in contact with an outer circumferential surface of the first container, and that in the liquid withdrawing system, the first container is made of a resin and the second container is made of a metal.

According to the configuration, when the pressurizing gas is led through the gas flow channel in the flow channel portion of the liquid withdrawing device to the inner space of the first container, the resin first container expands. The resin first container is accommodated in the metal second container while the outer circumferential surface of the first container being in contact with the inner circumferential surface of the second container. The first container, expansion of which in a radial direction orthogonal to the axis is restrained by the metal second container, expands in the axis direction by the pressure of the pressurizing gas.

According to the configuration, the liquid withdrawing device is attached to the first container with the distal end of the siphon tube inserted in the recess. Hence, even when the first container expands in the axis direction to increase the length in the axis direction between the opening portion and the bottom portion of the recess by a predetermined length, the distal end of the siphon tube can be kept inserted in the recess as long as the predetermined length falls within a certain range. In particular, under the atmospheric pressure, in which the first container is not pressurized, if the siphon tube is elastically deformed with the distal end in contact with the bottom portion of the recess, the elastic deformation will be gradually eliminated in accordance with the pressurization of the first container. The distal end of the siphon tube keeps inserted in the recess during the elimination of the elastic deformation of the siphon tube. Accordingly, the liquid can be reliably withdrawn without leaving any residue in the recess even when the first container is under pressurization by the pressurizing gas.

In a liquid withdrawing system according to an aspect of the present invention, the distal end of the siphon tube may have a notch portion communicating between the inside of the siphon tube and the recess when the distal end is in contact with the bottom portion of the recess.

With this configuration, even when the distal end of the siphon tube is in contact with the bottom portion of the recess, the liquid in the recess can be led via the notch portion to the inside of the siphon tube to be withdrawn.

The liquid withdrawing system may include flange portion connected to an upper end of the cylindrical contact portion and having a diameter larger than a diameter of the inner circumferential surface of the opening portion, and that in the liquid withdrawing device, an undersurface of the flange portion is engaged with the upper end of the opening portion when the liquid withdrawing device is attached to the opening portion.

According to the liquid withdrawing device with this configuration, when the liquid withdrawing device is attached to the opening portion, the undersurface of the flange portion is engaged with the upper end of the opening portion. As a result, the liquid withdrawing device can be reliably fixed to the opening portion of the first container.

In the liquid withdrawing system with the above configurations, an endless elastic member extending around the second axis may be attached to the undersurface of the flange portion.

With this configuration, the endless seal area extending around the axis is formed at the position where the undersurface of the flange portion contacts the upper end of the opening portion. This can suppress a problem of the pressurizing gas leaking to the outside through a gap between the opening portion of the first container and a liquid supply device even when the first container is pressurized by the pressurizing gas.

### {Advantageous Effects of Invention}

According to the present invention, a liquid withdrawing system can be provided that allows, in attaching the liquid withdrawing device to a container with a recess on its bottom surface, a distal end of a siphon tube of the liquid withdrawing device to be reliably inserted into the recess.

### {Brief Description of Drawings}

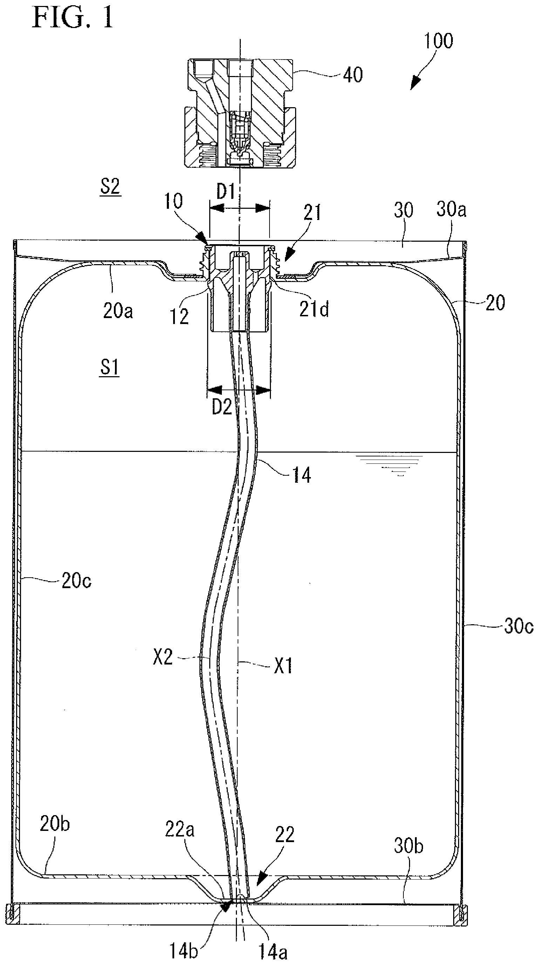

{Fig. 1}
   Fig. 1 is a vertical cross-sectional view of a liquid withdrawing system of an embodiment.
{Fig. 2}
   Fig. 2 is a vertical cross-sectional view showing a plug in Fig. 1.
{Fig. 3}
   Fig. 3 is a vertical cross-sectional view showing an inner container and an outer container in Fig. 1.
{Fig. 4}
   Fig. 4 is a vertical cross-sectional view showing a socket in Fig. 1.
{Fig. 5}
   Fig. 5 is a vertical cross-sectional view showing the liquid withdrawing system with a cylindrical guide portion inserted in an opening portion.
{Fig. 6}
   Fig. 6 is a vertical cross-sectional view showing the liquid withdrawing system with a siphon tube inserted in a recess of the inner container.
{Fig. 7}
   Fig. 7 is a vertical cross-sectional view showing the liquid withdrawing system with an inner space of the inner container under pressurization.

### {Description of Embodiments}

Hereinafter, a liquid withdrawing system 100 of an embodiment of the present invention will be described with reference to the drawings.

As shown in Fig. 1, the liquid withdrawing system 100 of the embodiment includes a plug 10 (liquid withdrawing device), an inner container 20 (first container), an outer container 30 (second container), and a socket 40. In Fig. 1, the socket 40 is unconnected to the plug 10. In the liquid withdrawing system 100 shown in Fig. 1, an inner space S1 of the inner container 20 and an outer space S2 of the inner container 20 are in communication with each other, and are at atmospheric pressure.

In the liquid withdrawing system 100, a pressurizing gas is led via the socket 40 to the inner space S1 of the inner container 20 to pressurize the inner space S1, and a liquid (e.g., a chemical solution used for semiconductor manufacturing apparatuses) is drawn to the outside via the plug 10 and the socket 40.

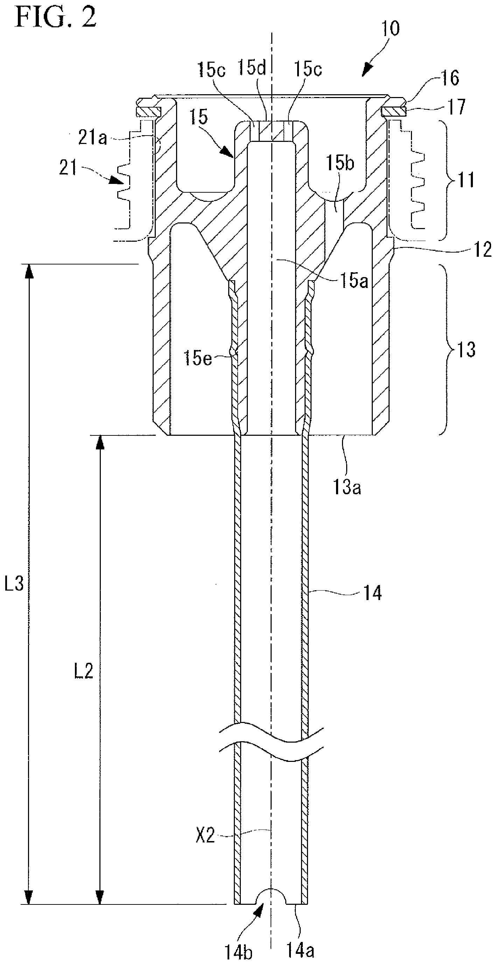

As shown in Fig. 2, the plug 10 includes a cylindrical contact portion 11, an engaging claw 12, a cylindrical guide portion 13, a siphon tube 14, a flow channel portion 15, a flange portion 16, and a packing 17 (elastic member).

The cylindrical contact portion 11, the engaging claw 12, the cylindrical guide portion 13, the flow channel portion 15, and the flange portion 16 are integrally formed in an approximately cylindrical member from a resin material (e.g., a high density polyethylene (HDPE)).

As shown in Fig. 1, the plug 10 is attached to an opening portion 21 of the inner container 20.

The cylindrical contact portion 11 of the plug 10 is a cylindrical member that is in contact with an inner circumferential surface 21a of the opening portion 21 when the plug 10 is attached to the opening portion 21 of the inner container 20.

The engaging claw 12 of the plug 10 is a member that is connected to a lower end of the cylindrical contact portion 11, and elastically deforms inwardly when inserted along the inner circumferential surface 21a of the opening portion 21 and is engaged with a lower end 21d of the opening portion 21 (refer to Fig. 1) after passing through the opening portion 21.

The cylindrical guide portion 13 of the plug 10 is a cylindrical member that is connected to a lower end of the engaging claw 12 and contacts the inner circumferential surface 21a of the opening portion 21 when inserted along the inner circumferential surface 21a. As will be described later, the cylindrical guide portion 13 is a member for guiding a distal end 14a of the siphon tube 14 so that the distal end 14a of the siphon tube 14 is reliably inserted into a recess 22 provided on a bottom surface 20b of the inner container 20.

Slits (not shown) extending along an axis X2 from a lower end 13a of the cylindrical guide portion 13 to the cylindrical contact portion 11 are provided at a plurality of points around the axis X2 on the cylindrical contact portion 11, the engaging claw 12, and the cylindrical guide portion 13 (e.g., at four points at 90-degrees intervals). The provision of the plurality of slits to the plug 10 allows the engaging claw 12 to be elastically deformed inwardly when the engaging claw 12 is inserted along the inner circumferential surface 21a of the opening portion 21.

The siphon tube 14 of the plug 10 is a tubular member that extends in the axis X2 direction and is inserted toward the bottom surface 20b of the inner container 20. The siphon tube 14 is formed, for example, from PFA (copolymer of tetrafluoroethylene and perfluoroalkoxyethylene), which has superior chemical resistance. The siphon tube 14 is a member that can be elastically deformed.

As shown in Fig. 2, the siphon tube 14 is inserted such that the siphon tube 14 surrounds a portion forming a liquid flow channel 15a of the flow channel portion 15. An edge portion 15e formed at the siphon tube 14 and the flow channel portion 15 forms an endless seal area around the axis X2 at the point where the siphon tube 14 and the flow channel portion 15 contact with each other. The seal area prevents communication of the inside of the siphon tube 14 and the inner space S1 of the inner container 20.

As shown in Fig. 2, the distal end 14a of the siphon tube 14 has a notch portion 14b that communicates between the inside of the siphon tube 14 and the recess 22 of the inner container 20 when the distal end 14a is in contact with a bottom portion 22a of the recess 22.

In the liquid withdrawing system 100 shown in Fig. 1, the inner space S1 and the outer space S2 of the inner container 20 are in communication with each other and are at atmospheric pressure. In this state, the siphon tube 14 is elastically deformed with the distal end 14a (refer to Fig. 2) in contact with the bottom portion 22a of the recess 22.

As shown in Fig. 2, the flow channel portion 15 of the plug 10 includes the liquid flow channel 15a, a gas flow channel 15b, a through hole 15c, and a valve control portion 15d.

The liquid flow channel 15a leads the liquid contained in the inner container 20 through the distal end 14a of the siphon tube 14 to the through hole 15c.

The gas flow channel 15b leads the pressurizing gas supplied from a pressurizing gas supply source (not shown) connected to the socket 40 to the inner space S1 of the inner container 20. The pressurizing gas led to the inner space S1 pushes out the liquid through the distal end 14a of the siphon tube 14 toward the liquid flow channel 15a. The gas flow channel 15b is provided at a plurality of points around the axis X2 (e.g., at three points at 120-degrees intervals).

The through hole 15c leads the liquid led from the liquid flow channel 15a to a liquid flow channel 41a of the socket 40. The through hole 15c is provided at a plurality of points around the axis X2 (e.g., at four points at 90-degrees intervals).

The valve control portion 15d is a member that pushes up a valve 43 of the socket 40 along the axis X2 when the socket 40 is attached to the plug 10. The liquid is led through the through holes 15c to the liquid flow channel 41a of the socket 40 by pushing up the valve 43 of the socket 40.

The flange portion 16 of the plug 10 is an annular member that is connected to an upper end of the cylindrical contact portion 11 and has a diameter larger than that of the inner circumferential surface 21a of the opening portion 21 of the inner container 20.

The packing 17 of the plug 10 is an annular elastic member that is attached to an undersurface of the flange portion 16 and extends around the axis X2. The packing 17 is formed from, for example, polyethylene foam or an elastic body of fluororubber, which is chemically resistant.

When the plug 10 is attached to the opening portion 21 of the inner container 20, the undersurface of the flange portion 16 engages with an upper end 21c of the opening portion 21 via the packing 17. This prevents the plug 10 from being drawn into the inner space S1 through the opening portion 21.

When the plug 10 is attached to the opening portion 21 of the inner container 20, the packing 17 is in contact with the upper end 21c of the opening portion 21 for the entire circumference of the upper end 21c. The contact of the upper end 21c of the opening portion 21 and the packing 17 forms an endless seal area extending around the axis X2. This can suppress a problem of the pressurizing gas leaking to the outside through a gap between the opening portion 21 of the inner container 20 and the plug 10 even when the inner space S1 of the inner container 20 is pressurized by the pressurizing gas.

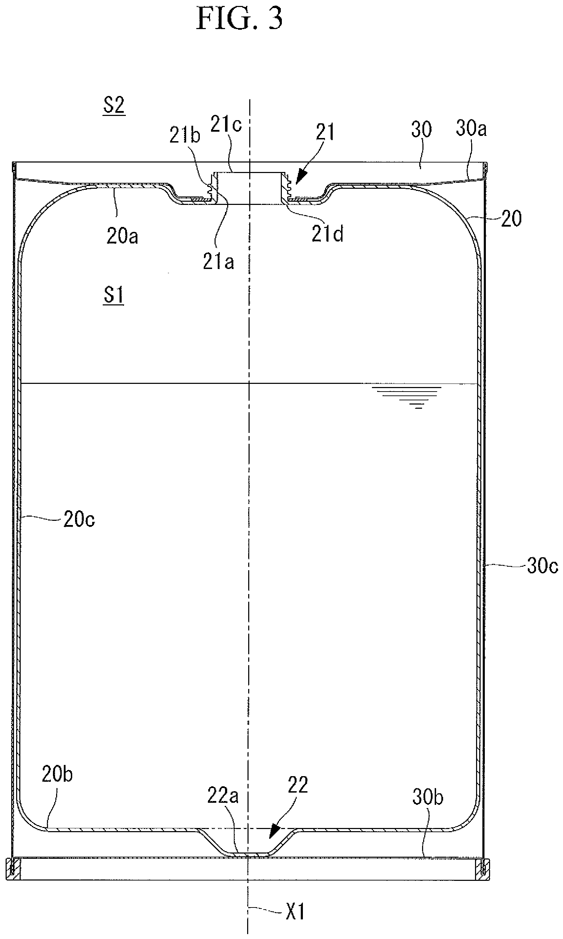

As shown in Fig. 3, the inner container 20 is a container formed in a cylindrical shape along a vertically extending axis X1, and can contain a liquid inside. The inner container 20 is formed from a chemically resistant resin material (e.g., a high density polyethylene (HDPE)). The inner container 20 is a container with its top surface 20a, the bottom surface 20b, and a side surface 20c integrally formed with one another.

The top surface 20a of the inner container 20 has at a central portion thereof the opening portion 21 extending in the axis X1 direction. Also, the bottom surface 20b of the inner container 20 has at a central portion thereof the recess 22. Thus, the positions of the opening portion 21 and the recess 22 correspond with each other with respect to a radial direction orthogonal to the axis X1.

The opening portion 21 is a portion where a liquid flows between the inner space S1 and the outer space S2 of the inner container 20. As shown in Fig. 3, the opening portion 21 of the inner container 20 carries external threads 21b on its outer circumferential surface.

The inner space S1 is prevented from communicating with the outer space S2 by attaching a cap (not shown) to the external threads 21b, and the liquid can be stored in this way. In addition, the socket 40 can be fixed to the opening portion 21 as it is attached to the external threads 21b.

The recess 22 is a portion where the liquid contained in the inner space S1 of the inner container 20 is left when only a little amount of the liquid remains. The insertion of the distal end 14a of the siphon tube 14 of the plug 10 into the recess 22 allows the liquid to be reliably withdrawn without leaving any residue in the inner container 20.

As shown in Fig. 3, the outer container 30 is a metal container (e.g., made of iron) formed in a cylindrical shape along the vertically extending axis X1. The outer container 30 accommodates the inner container 20 inside by inserting it through an upper end of a cylindrical side surface 30c with a bottom surface 30b attached to a lower end of the side surface 30c, and then attaching a top surface 30a to the upper end of the side surface 30c. The top surface 30a has at a central portion thereof a hole for inserting the opening portion 21.

As shown in Fig. 3, the outer container 30 accommodates the inner container 20 with the opening portion 21 exposed from the top surface 30a of the outer container 30 and an inner circumferential surface of the side surface 30c in contact with an outer circumferential surface of the side surface 20c of the inner container 20.

The socket 40 leads the pressurizing gas supplied from an external pressurizing gas supply source (not shown) to the inner space S1 of the inner container 20, while leading the liquid withdrawn from the inner container 20 by the pressurization of the inner space S1 to the outside.

The socket 40 includes a socket body 41, a sleeve 42, a valve 43, an O ring 44, and an O ring 45.

The socket body 41 is a member that is formed in an approximately cylindrical shape along the axis X1 direction.

The socket body 41 has inside the liquid flow channel 41a extending in the axis X1 direction. The liquid flow channel 41a has on its upper end a piping attachment portion 41b carrying internal threads on its inner circumferential surface. A piping (not shown) for leading the liquid to the outside is attached to the piping attachment portion 41b.

The socket body 41 has inside a gas flow channel 41c penetrating the socket body 41 from an upper end to a lower end. The gas flow channel 41c is provided at an upper end with a piping attachment portion 41d carrying internal threads on its inner circumferential surface. A piping (not shown) for leading the pressurizing gas supplied from the external supply source (not shown) to the plug 10 is attached to the piping attachment portion 41d.

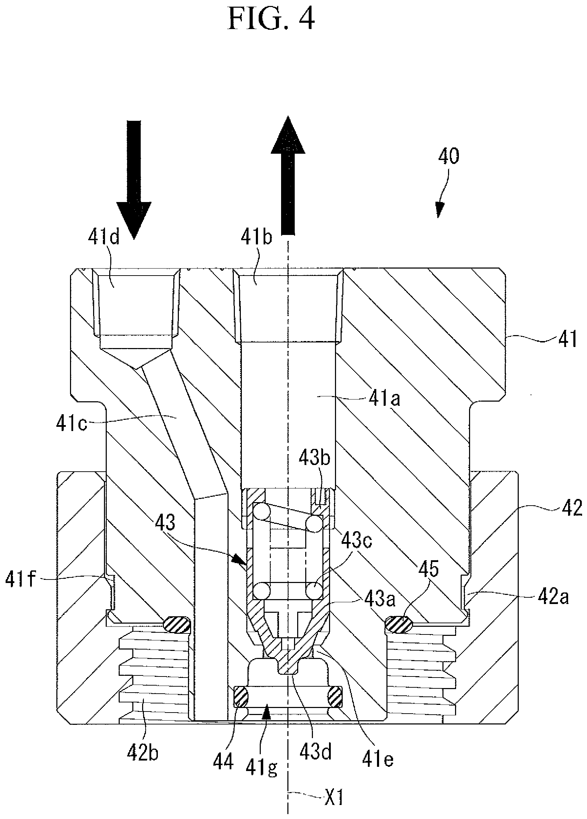

The socket body 41 is provided with a valve seat 41e below the liquid flow channel 41a. As shown in Fig. 4, when the socket 40 is not attached to the plug 10, the valve plug 43a is brought into contact with the valve seat 41e of the socket 40 by a biasing force of the spring 43c of the valve 43. In the state shown in Fig. 4, the position where the valve seat 41e contacts the valve plug 43a forms a seal area, which blocks the flow of the liquid in the seal area.

The socket body 41 has on its outer circumferential surface an endless annular groove portion 41f extending around the axis X1. An annular protrusion portion 42a of the sleeve 42 engages the annular groove portion 41f.

The sleeve 42 is a member for fixing the socket body 41 to the opening portion 21 of the inner container 20. The sleeve 42 is a member that is formed in a cylindrical shape along the axis X1.

The sleeve 42 has the endless annular protrusion portion 42a extending around the axis X1. As shown in Fig. 4, the annular protrusion portion 42a engages the annular groove portion 41f formed on the socket body 41. Accordingly, the sleeve 42 is rotatable about the axis X1 relative to the socket body 41.

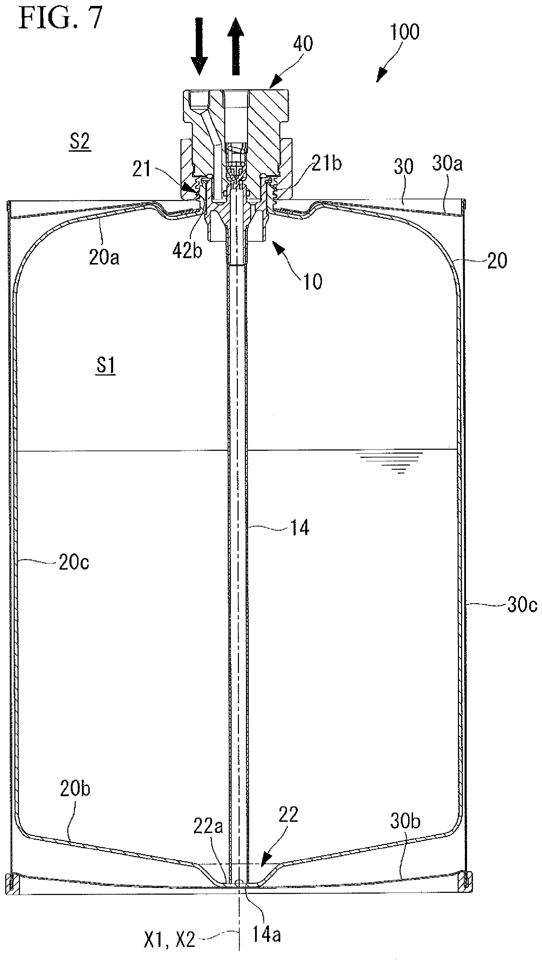

The sleeve 42 has internal threads 42b at a lower portion of its inner circumferential surface. As shown in Fig. 7, the socket 40 is fixed to the opening portion 21 as the internal threads 42b of the sleeve 42 is fastened to the external threads 21b formed on the outer circumferential surface of the opening portion 21 of the inner container 20.

The valve 43 is a mechanism that switches whether the liquid flow channel 15a of the plug 10 communicates with the liquid flow channel 41a of the socket 40 or is blocked. The valve 43 includes a valve plug 43a, an end stop portion 43b, and a spring 43c.

The end stop portion 43b is a cylindrical member with external threads on its outer circumferential surface and fastened to internal threads formed on a lower portion of an inner circumferential surface of the liquid flow channel 41a of the socket body 41. The end stop portion 43b supports one end of the spring 43c. The other end of the spring 43c is held by the valve plug 43a. As a result, a biasing force against the valve seat 41e along the axis X1 is applied to the valve plug 43a by the spring 43c.

When the socket 40 is attached to the opening portion 21 of the inner container 20 as shown in Fig. 7, the valve control portion 15d (refer to Fig. 2) of the plug 10 comes into contact with a tip portion 43d of the valve plug 43a to push the valve plug 43a upwardly along the axis X1.

When the valve plug 43a is pushed upwardly, the liquid flow channel 41a of the socket 40 comes into communication with the liquid flow channel 15a of the plug 10 via the through holes 15c.

The O ring 44 is an elastic member that forms a seal area between the socket body 41 and an outer circumferential surface of the flow channel portion 15 when the flow channel portion 15 of the plug 10 is inserted into a recess 41g of the socket body 41.

The O ring 45 is an elastic member that forms a seal area between the socket body 41 and an upper end of the flange portion 16 of the plug 10 when the socket 40 is attached to the opening portion 21 of the inner container 20.

Next, a description will be made on a step in which an operator attaches the plug 10 to the opening portion 21 of the inner container 20.

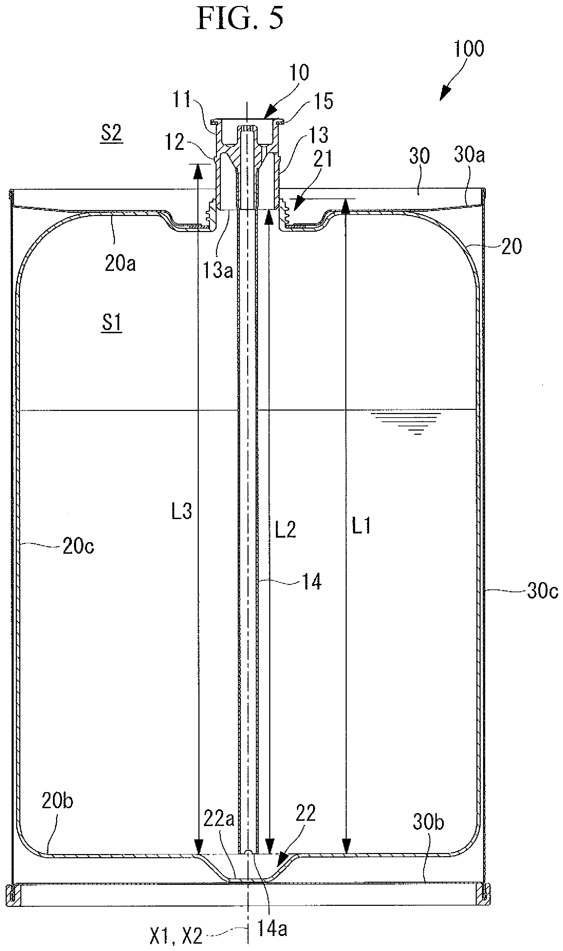

An operator who uses the liquid withdrawing system 100 of the embodiment inserts the distal end 14a of the siphon tube 14 of the plug 10 to the opening portion 21 of the inner container 20 without the plug 10 shown in Fig. 3 to achieve the state shown in Fig. 5. In Fig. 5, the lower end 13a of the cylindrical guide portion 13 is inserted in the upper end 21c of the opening portion 21.

As shown in Fig. 5, a length in the axis X1 direction from the upper end 21c of the opening portion 21 to the bottom surface 20b of the inner container 20 is defined as a first length L1, a length in the axis X2 direction from the lower end 13a of the cylindrical guide portion 13 to the distal end 14a of the siphon tube 14 is defined as a second length L2, and a length in the axis X2 direction from a lower end of the engaging claw 12 to the distal end 14a of the siphon tube 14 is defined as a third length L3.

As shown in Fig. 5, the second length L2 is shorter than the first length L1. Accordingly, the distal end 14a of the siphon tube 14 has not reached the position of the bottom surface 20b of the inner container 20 (an upper end of the recess 22 shown in Fig. 5) at the time of inserting the lower end 13a of the cylindrical guide portion 13 into the opening portion 21. Hence, even if the siphon tube 14 is inserted into the opening portion 21 with the axis X2 of the siphon tube 14 tilted from the axis X1 of the inner container 20, at the time of inserting the lower end 13a of the cylindrical guide portion 13 into the opening portion 21, the distal end 14a of the siphon tube 14 can be placed at a position from which the distal end 14a will be reliably accommodated in the recess 22 of the bottom surface 20b of the inner container 20.

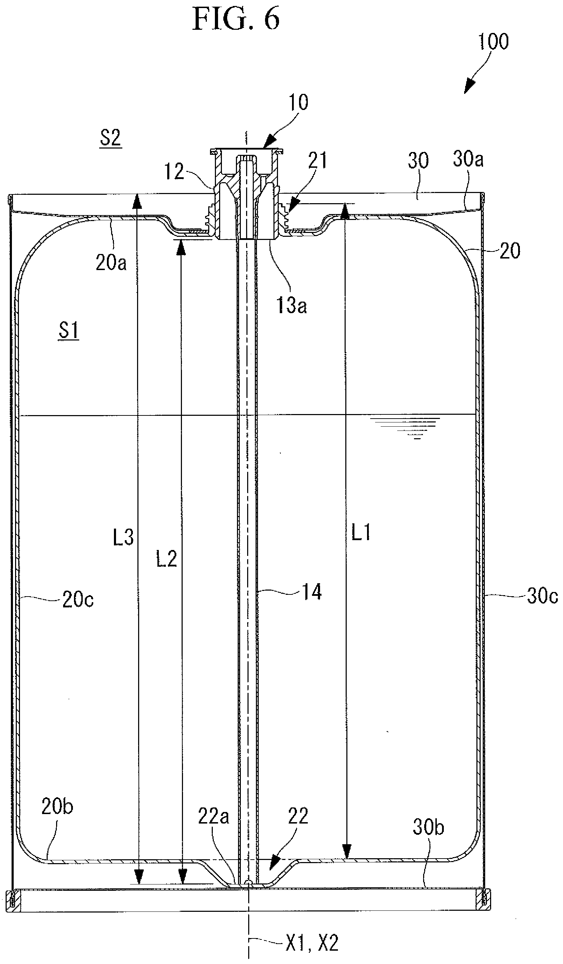

The operator further pushes the plug 10 downwardly from the state shown in Fig. 5 along the axis X1 to achieve the state shown in Fig. 6. In Fig. 6, the distal end 14a of the siphon tube 14 has reached the bottom portion 22a of the recess 22.

As shown in Fig. 6, the third length L3 is longer than the second length L2. Accordingly, when the distal end 14a of the siphon tube 14 just reached the bottom portion 22a of the recess 22, the lower end of the engaging claw 12 has not reached the upper end 21c of the opening portion 21.

From the state shown in Fig. 5 to that in Fig. 6, the cylindrical guide portion 13 of the plug 10 is in contact with the inner circumferential surface 21a of the opening portion 21. Because the cylindrical guide portion 13 allows the siphon tube 14 to be guided along the axis X1, the distal end 14a of the siphon tube 14 can be reliably inserted into the recess 22 of the inner container 20.

When the operator further pushes the plug 10 downwardly from the state shown in Fig. 6, the siphon tube 14 is elastically deformed with the distal end 14a keeping in contact with the bottom portion 22a of the recess 22, and the lower end of the engaging claw 12 reaches the upper end 21c of the opening portion 21.

When the operator further pushes the plug 10 downwardly after the lower end of the engaging claw 12 reaching the upper end 21c of the opening portion 21, the engaging claw 12 passes through the inner circumferential surface 21a of the opening portion 21 while being elastically deformed inwardly.

When an upper end of the engaging claw 12 passes through the inner circumferential surface 21a of the opening portion 21 and reaches the lower end 21d of the opening portion 21, the engaging claw 12 that has been elastically deformed inwardly returns to its shape outwardly.

As shown in Fig. 1, a diameter D2 of an outer circumferential surface of the engaging claw 12 is larger than a diameter D1 of the inner circumferential surface 21a of the opening portion 21. Accordingly, with the engaging claw 12 having returned to its shape outwardly, the upper end of the engaging claw 12 is engaged with the lower end 21d of the opening portion 21. As a result, the plug 10 is attached to the opening portion 21 with the flange portion 16 engaged with the upper end 21c of the opening portion 21 and the engaging claw 12 engaged with the lower end 21d of the opening portion 21.

When the engaging claw 12 passes through the inner circumferential surface 21a of the opening portion 21, the distal end 14a of the siphon tube 14 keeps in contact with the bottom portion 22a of the recess 22. Accordingly, although the siphon tube 14 is elastically deformed, the distal end 14a of the siphon tube 14 never moves to other positions from the recess 22. As a result, as shown in Fig. 1, when the plug 10 is attached to the opening portion 21, the distal end 14a of the siphon tube 14 is inserted in the recess 22.

Next, with reference to Fig. 7, a description will be made on the liquid withdrawing system 100 in which the inner space S1 of the inner container 20 has been pressurized.

In the liquid withdrawing system 100 shown in Fig. 7, the pressurizing gas has been introduced into the inner space S1 from outside, with the plug 10 attached to the opening portion 21 of the inner container 20 as shown in Fig. 1, and further, with the socket 40 attached to the opening portion 21.

When the pressurizing gas is led into the gas flow channel 41c of the socket 40, the pressurizing gas is then led through the gas flow channels 15b of the plug 10 to the inner space S1 of the inner container 20. Pressurization of the inner space S1 by the pressurizing gas expands the inner container 20 that is formed from a resin material.

The resin inner container 20 is accommodated in the metal outer container 30 while the outer circumferential surface of the side surface 20c of the inner container 20 being in contact with the inner circumferential surface of the side surface 30c of the outer container 30. The inner container 20, expansion of which in a radial direction orthogonal to the axis X1 is restrained by the metal outer container 30, expands in the axis X1 direction by the pressure of the pressurizing gas.

As shown in Fig. 1, the top surface 20a and the bottom portion 22a of the recess 22 of the bottom surface 20b of the inner container 20 are respectively in contact with the top surface 30a and the bottom surface 30b of the outer container 30. Expansion of the inner container 20 in the axis X1 direction by the pressure of the pressurizing gas deforms the top surface 30a of the outer container 30 upwardly and the bottom surface 30b of the outer container downwardly.

As shown in Fig. 7, as the inner container 20 expands in the axis X1 direction to increase a distance from the opening portion 21 to the bottom portion 22a of the recess 22, the elastically deformed siphon tube 14 gradually returns to its shape. For example, as shown in Fig. 7, the elastic deformation of the siphon tube 14 is eliminated, so that the axis X2 of the siphon tube 14 corresponds to the axis X1 of the inner container 20. As long as the length of the inner container 20 that expands in the axis X1 direction falls within a certain range, the distal end 14a of the siphon tube 14 keeps inserted in the recess 22 as shown in Fig. 7. Accordingly, the liquid can be reliably withdrawn by the siphon tube 14 without leaving any residue in the recess 22 even when the inner space S1 of the inner container 20 is under pressurization.

The operations and effects of the embodiment as described above will be described.

In the liquid withdrawing system 100 of the embodiment, the plug 10 is attached to the opening portion 21 of the cylindrical inner container 20 having the opening portion 21 extending in the axis X1 direction on the top surface 20a and a recess 22 at the position on the bottom surface 20b corresponding to the opening portion 21. In attaching the plug 10 to the opening portion 21 of the inner container 20, the lower end 13a of the cylindrical guide portion 13 is inserted into the opening portion 21, and the engaging claw 12 is inserted while being elastically deformed inwardly and then engaged with the lower end 21d of the opening portion 21.

In the liquid withdrawing system 100 of the embodiment, the second length L2 in the axis X2 direction from the lower end 13a of the cylindrical guide portion 13 to the distal end 14a of the siphon tube 14 is shorter than the first length L1 in the axis X1 direction from the upper end 21c of the opening portion 21 of the inner container 20 to the bottom surface 20b.

Accordingly, the distal end 14a of the siphon tube 14 has not reached the bottom surface 20b of the inner container 20 at the time of inserting the lower end 13a of the cylindrical guide portion 13 into the opening portion 21. Hence, at the time of inserting the lower end 13a of the cylindrical guide portion 13 into the opening portion 21, the distal end 14a of the siphon tube 14 can be placed at a position from which the distal end 14a will be reliably accommodated in the recess 22 of the bottom surface 20b of the inner container 20.

Also, because the cylindrical guide portion 13 allows the siphon tube 14 to be guided along the axis X1, the distal end 14a of the siphon tube 14 can be reliably inserted into the recess 22 of the inner container 20.

In the liquid withdrawing system 100 of the embodiment, the third length L3 in the axis X2 direction from the engaging claw 12 to the distal end 14a of the siphon tube 14 is longer than the first length L1. Accordingly, the distal end 14a of the siphon tube 14 becomes inserted in the recess 22 of the inner container 20 at the time when the engaging claw 12 passes through the upper end 21c of the opening portion 21.

In order to move the engaging claw 12 from the upper end 21c to the lower end 21d of the opening portion 21, the plug 10 needs to be pushed in such that the engaging claw 12 is elastically deformed inwardly. Here, because the distal end 14a of the siphon tube 14 has been already inserted in the recess 22, the action of pushing in the plug 10 never moves the distal end 14a of the siphon tube 14 to other positions other than the recess 22.

Accordingly, the plug 10 can be attached to the opening portion 21 of the inner container 20 with the distal end 14a of the siphon tube 14 inserted in the recess 22.

According to the embodiment, when the pressurizing gas is led into the inner space S1 of the inner container 20 through the gas flow channels 15b of the flow channel portion 15 of the plug 10, the resin inner container 20 expands. The resin inner container 20 is accommodated in the metal outer container 30 while the outer circumferential surface of the side surface 20c of the inner container 20 being in contact with the inner circumferential surface of the side surface 30c of the outer container 30. The inner container 20, expansion of which in a radial direction orthogonal to the axis X1 is restrained by the metal outer container 30, expands in the axis X1 direction by the pressure of the pressurizing gas.

According to the embodiment, the plug 10 is attached to the inner container 20 with the distal end 14a of the siphon tube 14 inserted in the recess 22. Hence, even when the inner container 20 expands in the axis X1 direction to increase the length in the axis X1 direction between the opening portion 21 and the bottom portion 22a of the recess 22 by a predetermined length, the distal end 14a of the siphon tube 14 can be kept inserted in the recess 22 as long as the predetermined length falls within a certain range. Accordingly, the liquid can be reliably withdrawn without leaving any residue in the recess 22 even when the inside of the inner container 20 is under pressurization by the pressurizing gas.

In the liquid withdrawing system 100 of the embodiment, the distal end 14a of the siphon tube 14 has a notch portion 14b that communicates between the inside of the siphon tube 14 and the recess 22 with the distal end 14a in contact with the bottom portion 22a of the recess 22.

With this configuration, even when the distal end 14a of the siphon tube 14 is in contact with the bottom portion 22a of the recess 22, the liquid in the recess 22 can be led via the notch portion 14b to the inside of the siphon tube 14 to be withdrawn.

In the liquid withdrawing system 100 of the embodiment, the plug 10 includes the flange portion 16 that is connected to the upper end of the cylindrical contact portion 11 and has the diameter larger than that of the inner circumferential surface 21a of the opening portion 21. When the plug 10 is attached to the opening portion 21, the undersurface of the flange portion 16 is engaged with the upper end 21c of the opening portion 21.

With this configuration, when the plug 10 is attached to the opening portion 21, the undersurface of the flange portion 16 is engaged with the upper end 21c of the opening portion 21. As a result, the plug 10 can be reliably fixed to the opening portion 21 of the inner container 20.

In the liquid withdrawing system 100 of the embodiment, the endless packing 17 extending around the axis X1 is attached to the undersurface of the flange portion 16.

With this configuration, the endless seal area extending around the axis X1 is formed at the position where the undersurface of the flange portion 16 contacts the upper end of the opening portion 21. This can suppress a problem of the pressurizing gas leaking to the outside through a gap between the opening portion 21 of the inner container 20 and the plug 10 even when the inner space S1 of the inner container 20 is pressurized by the pressurizing gas.

### {Other Embodiments}

Although the opening portion 21 and the recess 22 of the inner container 20 are formed at the central portion of the inner container 20 (the positions where the axis X1, the central axis, passes through) in the above description, they may be otherwise formed, but not forming part of the invention claimed.

For example, the opening portion 21 and the recess 22 may be formed at a position other than the central portion. In this case, the position of the recess 22 formed in the bottom surface 20b of the inner container 20 is to correspond with the position of the opening portion 21 formed in the top surface 20a of the inner container 20.

In addition, the present invention is not limited to the above embodiment, and modifications may be made as appropriate without departing from the scope of the present invention as defined in the appended claims.

## Claims

1. A liquid withdrawing system (100) comprising: a first container (20) formed in a cylindrical shape along a first axis (X1) extending in a vertical direction, the first container (20) having on a top surface an opening portion (21) extending in a direction of the first axis (X1) and a recess (22); and
a liquid withdrawing device (10) attached to the opening portion (21),
the liquid withdrawing device (10) including:
a cylindrical contact portion (11) having a cylindrical shape, the cylindrical contact portion being in contact with an inner circumferential surface of the opening portion (21) when the liquid withdrawing device (10) is attached to the opening portion (21);
an engaging claw (12) connected to a lower end of the cylindrical contact portion (11), the engaging claw (12) being elastically deformed inwardly when inserted along the inner circumferential surface of the opening portion (21) and engaged with a lower end of the opening portion (21) after passing through the opening portion (21);
a cylindrical guide portion (13) having a cylindrical shape and connected to a lower end of the engaging claw (12), the cylindrical guide portion (13) being in contact with the inner circumferential surface of the opening portion (21) when inserted along the inner circumferential surface;
a siphon tube (14) extending in a second axis direction (X2) and inserted toward the bottom surface of the first container (20); and
a flow channel portion (15) having a liquid flow channel connected to the siphon tube (14) and a gas flow channel for leading a pressurizing gas supplied from an outside of the first container (20) to an inner space of the first container (20), **characterized in that** the recess (22) is provided at a position on a bottom surface of the container (20) corresponding to the position of the opening portion (21) on the top surface of the container (20), wherein the cylindrical guide portion (13) guides a distal end (14a) of the siphon tube (14) so that the distal end (14a) of the siphon tube (14) is reliably inserted into the recess (22);
and **in that** a second length (L2) in the second axis direction from a lower end of the cylindrical guide portion (13) to a distal end of the siphon tube (14) is shorter than a first length (L1) in the first axis direction from an upper end of the opening portion (21) to the bottom surface of the first container (20), and a third length (L3) in the second axis direction from the engaging claw (12) to the distal end of the siphon tube (14) is longer than the first length (L1) such that when the engaging claw (12) passes through the inner circumferential surface (21a) of the opening portion (21a), a distal end (14a) of the siphon tube (14) is in contact with the bottom portion of the recess (22).

2. A liquid withdrawing system (100) according to claim 1, comprising a second container (30) formed in a cylindrical shape along the first axis direction, the second container (30) accommodating the first container (20) with the opening portion (21) being exposed and an inner circumferential surface in contact with an outer circumferential surface of the first container (20),
wherein the first container (20) is made of a resin and the second container (30) is made of a metal.

3. A liquid withdrawing system (100) according to claim 1 or 2, wherein the distal end of the siphon tube (14) has a notch portion (14b) communicating between an inside of the siphon tube (14) and the recess (22) when the distal end is in contact with the bottom portion of the recess (22) .

4. A liquid withdrawing system (100) according to any one of claims 1 to 3, comprising a flange portion (16) connected to an upper end of the cylindrical contact portion (11) and having a diameter larger than a diameter of the inner circumferential surface of the opening portion (21),
wherein an undersurface of the flange portion (16) is engaged with the upper end of the opening portion (21) when the liquid withdrawing device (10) is attached to the opening portion (21).

5. A liquid withdrawing system (100) according to claim 4, wherein an endless elastic member extending around the second axis (X2) is attached to the undersurface of the flange portion (16).

## Patentansprüche

1. Flüssigkeitsentnahmesystem (100), umfassend: einen ersten Behälter (20), der in zylindrischer Form entlang einer ersten Achse (X1) ausgebildet ist, die sich in vertikaler Richtung erstreckt, wobei der erste Behälter (20) auf einer Deckfläche einen Öffnungsteil (21), der sich in einer Richtung der ersten Achse (X1) erstreckt, und eine Vertiefung (22) aufweist, und
eine Flüssigkeitsentnahmevorrichtung (10), die auf dem Öffnungsteil (21) angebracht ist, wobei die Flüssigkeitsentnahmevorrichtung (10) enthält:
einen zylindrischen Kontaktteil (11) mit zylindrischer Form, wobei der zylindrische Kontaktteil in Kontakt mit einer inneren Umfangsfläche des Öffnungsteils (21) steht, wenn die Flüssigkeitsentnahmevorrichtung (10) am Öffnungsteil (21) angebracht ist,
eine Greifklaue (12), die mit einem unteren Ende des zylindrischen Kontaktteils (11) verbunden ist, wobei die Greifklaue (12) elastisch nach innen verformt ist, wenn sie entlang der inneren Umfangsfläche des Öffnungsteils (21) eingesetzt ist, und mit dem unteren Ende des Öffnungsteils (21) in Eingriff steht, nachdem sie durch das Öffnungsteil (21) verläuft,
einen zylindrischen Führungsteil (13) mit zylindrischer Form und verbunden mit einem unteren Ende der Greifklaue (12), wobei der zylindrische Führungsteil (13) in Kontakt mit der inneren Umfangsfläche des Öffnungsteils (21) steht, wenn es entlang der inneren Umfangsfläche eingesetzt ist,
ein Siphonrohr (14), das sich in Richtung einer zweiten Achse (X2) erstreckt und zur Bodenfläche des ersten Behälters (20) hin eingesetzt ist, und
ein Fließkanalteil (15) mit einem Flüssigkeitsfließkanal, der mit dem Siphonrohr (14) verbunden ist, und einem Gasfließkanal zum Leiten eines Druck erzeugenden Gases, das von außerhalb des ersten Behälters (20) zum Innenraum des ersten Behälters (20) zugeführt wird, **dadurch gekennzeichnet, dass**
die Vertiefung (22) an einer Stelle auf einer Bodenfläche des Behälters (20) entsprechend der Position des Öffnungsteils (21) auf der Deckfläche des Behälters (20) vorgesehen ist, wobei der zylindrische Führungsteil (13) ein fernes Ende (14a) des Siphonrohrs (14) so führt, dass das ferne Ende (14a) des Siphonrohrs (14) sicher in der Vertiefung (22) eingesetzt ist,
und dadurch, dass eine zweite Länge (L2) in Richtung der zweiten Achse von einem unteren Ende des zylindrischen Führungsteils (13) zu einem fernen Ende des Siphonrohrs (14) kürzer ist als eine erste Länge (L1) in Richtung der ersten Achse von einem oberen Ende des Öffnungsteils (21) zur Bodenfläche des ersten Behälters (20), und eine dritte Länge (L3) in Richtung der zweiten Achse von der Greifklaue (12) zum fernen Ende des Siphonrohrs (14) derart länger ist als die erste Länge (L1), dass wenn die Greifklaue (12) durch die innere Umfangsfläche (21a) des Öffnungsteils (21) läuft, ein fernes Ende (14a) des Siphonrohrs (14) in Kontakt mit dem Bodenteil der Vertiefung (22) steht.

2. Flüssigkeitsentnahmesystem (100) nach Anspruch 1, umfassend einen zweiten Behälter (30), der in zylindrischer Form entlang der Richtung der ersten Achse ausgebildet ist, wobei der zweite Behälter (30) den ersten Behälter (20) mit dem Öffnungsteil (21) freiliegend und einer inneren Umfangsfläche in Kontakt mit einer äußeren Umfangsfläche des ersten Behälters (20) aufnimmt,
wobei der erste Behälter (20) aus einem Harz gefertigt und der zweite Behälter (30) aus einem Metall gefertigt ist.

3. Flüssigkeitsentnahmesystem (100) nach Anspruch 1 oder 2, wobei das ferne Ende des Siphonrohrs (14) einen Kerbenteil (14b) aufweist, das zwischen einem Inneren des Siphonrohrs (14) und der Vertiefung (22) in Verbindung steht, wenn das ferne Ende in Kontakt mit dem Bodenteil der Vertiefung (22) steht.

4. Flüssigkeitsentnahmesystem (100) nach einem der Ansprüche 1 bis 3, umfassend einen Flanschteil (16), der mit einem oberen Ende des zylindrischen Kontaktteils (11) verbunden ist und einen Durchmesser aufweist, der größer ist als ein Durchmesser der inneren Umfangsfläche des Öffnungsteils (21),
wobei eine Unterseite des Flanschteils (16) in Eingriff mit dem oberen Ende des Öffnungsteils (21) steht, wenn die Flüssigkeitsentnahmevorrichtung (10) am Öffnungsteil (21) angebracht ist.

5. Flüssigkeitsentnahmesystem (100) nach Anspruch 4, wobei ein endloses elastisches Element, das sich um die zweite Achse (X2) erstreckt, auf der Unterseite des Flanschteils (16) angebracht ist.

## Revendications

1. Système de retrait de liquide (100) comprenant : un premier contenant (20) formé en une forme cylindrique le long d'un premier axe (X1) s'étendant dans une direction verticale, le premier contenant (20) présentant sur une surface supérieure une portion d'ouverture (21) s'étendant dans une direction du premier axe (X1) et un évidement (22) ; et
un dispositif de retrait de liquide (10) attaché à la portion d'ouverture (21),
le dispositif de retrait de liquide (10) incluant :
une portion de contact cylindrique (11) présentant une forme cylindrique, la portion de contact cylindrique étant en contact avec une surface circonférentielle intérieure de la portion d'ouverture (21) lorsque le dispositif de retrait de liquide (10) est attaché à la portion d'ouverture (21) ;
une griffe de mise en prise (12) raccordée à une extrémité inférieure de la portion de contact cylindrique (11), la griffe de mise en prise (12) étant déformée élastiquement vers l'intérieur lorsqu'elle est insérée le long de la surface circonférentielle intérieure de la portion d'ouverture (21) et mise en prise avec une extrémité inférieure de la portion d'ouverture (21) après le passage au travers de la portion d'ouverture (21) ;
une portion de guidage cylindrique (13) présentant une forme cylindrique et raccordée à une extrémité inférieure de la griffe de mise en prise (12), la portion de guidage cylindrique (13) étant en contact avec la surface circonférentielle intérieure de la portion d'ouverture (21) lorsqu'elle est insérée le long de la surface circonférentielle intérieure ;
un tube de siphon (14) s'étendant dans une seconde direction d'axe (X2) et inséré vers la surface inférieure du premier contenant (20) ; et
une portion de canal de flux (15) présentant un canal de flux de liquide raccordé au tube de siphon (14) et un canal de flux de gaz pour mener un gaz de pressurisation fourni d'un extérieur du premier contenant (20) à un espace intérieur du premier contenant (20), **caractérisé en ce que**
l'évidement (22) est prévu à une position sur une surface inférieure du contenant (20) correspondant à la position de la portion d'ouverture (21) sur la surface supérieure du contenant (20), dans lequel la portion de guidage cylindrique (13) guide une extrémité distale (14a) du tube de siphon (14) de sorte que l'extrémité distale (14a) du tube de siphon (14) soit insérée de manière sûre dans l'évidement (22) ;
et **en ce qu'**une deuxième longueur (L2) dans la seconde direction d'axe d'une extrémité inférieure de la portion de guidage cylindrique (13) à une extrémité distale du tube de siphon (14) est plus courte qu'une première longueur (L1) dans la première direction d'axe d'une extrémité supérieure de la portion d'ouverture (21) à la surface inférieure du premier contenant (20), et une troisième longueur (L3) dans la seconde direction d'axe de la griffe de mise en prise (12) à l'extrémité distale du tube de siphon (14) est plus longue que la première longueur (L1) de sorte que lorsque la griffe de mise en prise (12) passe au travers de la surface circonférence intérieure (21a) de la portion d'ouverture (21a), une extrémité distale (14a) du tube de siphon (14) soit en contact avec la portion inférieure de l'évidement (22).

2. Système de retrait de liquide (100) selon la revendication 1, comprenant un second contenant (30) formé en une forme cylindrique le long de la première direction d'axe, le second contenant (30) logeant le premier contenant (20) avec la portion d'ouverture (21) qui est exposée et une surface circonférentielle intérieure en contact avec une surface circonférentielle extérieure du premier contenant (20),
dans lequel le premier contenant (20) est réalisé en une résine et le second contenant (30) est réalisé en un métal.

3. Système de retrait de liquide (100) selon la revendication 1 ou 2, dans lequel l'extrémité distale du tube de siphon (14) présente une portion d'encoche (14b) communiquant entre un intérieur du tube de siphon (14) et l'évidement (22) lorsque l'extrémité distale est en contact avec la portion inférieure de l'évidement (22).

4. Système de retrait de liquide (100) selon l'une quelconque des revendications 1 à 3, comprenant une portion de bride (16) raccordée à une extrémité supérieure de la portion de contact cylindrique (11) et présentant un diamètre supérieur à un diamètre de la surface circonférentielle intérieure de la portion d'ouverture (21),
dans lequel une surface inférieure de la portion de bride (16) est mise en prise avec l'extrémité supérieure de la portion d'ouverture (21) lorsque le dispositif de retrait de liquide (10) est attaché à la portion d'ouverture (21).

5. Système de retrait de liquide (100) selon la revendication 4, dans lequel un élément élastique sans fin s'étendant autour du second axe (X2) est attaché à la surface inférieure de la portion de bride (16).
